# FASCICULE DE BREVET EUROPEEN

(11) **EP 0 659 860 B1**
(45) Date de publication et mention de la délivrance du brevet: **13.08.1997**
(21) Numéro de dépôt: 94402863.8
(22) Date de dépôt: 13.12.1994
(51) Int. Cl.: C09J 123/16, C08K 5/3477, F02K 9/34

(54) **Matrice élastomère adhésive et utilisations**
Klebende elastomere Matrix und deren Anwendung
Adhesive elastomeric matrix and its use

(30) Priorité: 21.12.1993 FR 9315338
(43) Date de publication de la demande: 28.06.1995
(73) Titulaire: SOCIETE NATIONALE DES POUDRES ET EXPLOSIFS, F-75181 Paris Cédex 04 (FR)
(72) Inventeur: Maucourt, Jacques, F-91710 Vert Le Petit (FR); Combette, Claude, F-75013 Paris (FR)
(74) Mandataire: Pech, Bernard

(56) Documents cités:
- FR-A- 2 628 747
- US-A- 4 529 536
- US-A- 4 655 858

## Description

L'invention concerne une matrice élastomère adhésive qui est notamment utilisée pour réaliser la protection d'un substrat, soit par application de la dite matrice adhésive sur ce substrat, soit par application sur la dite matrice adhésive, préalablement mise en forme, du substrat.

Souvent l'adhérence de la matrice élastomère sur le substrat n'est pas satisfaisante ; elle est améliorée soit par un traitement particulier du substrat ou de la matrice élastomère, soit par la présence d'une couche d'adhésion, appelée "primaire" déposée entre la matrice élastomère et le substrat. La nécessité de prévoir soit ce traitement soit cette couche d'adhésion est un inconvénient important : en effet, le traitement particulier ou l'application de cette couche d'adhésion sur la matrice élastomère ou le substrat, augmente la durée et le coût de fabrication. De plus, l'application d'une couche de "primaire" peut générer des défauts dans le collage, par exemple, par emprisonnement de bulles d'air. Pour éviter tout défaut et obtenir une adhésion uniforme sur toute la surface traitée cette application requiert beaucoup de précaution.

Un premier objet de la présente invention est de remédier à ces inconvénients en proposant une matrice élastomère qui adhère directement sur les substrats.

Dans le domaine des inhibiteurs de combustion, le brevet FR 2 601 669 de la demanderesse décrit une matrice élastomère (copolymère éthylène-propylène-diènemonomère sur laquelle adhère directement un propergol. Cet effet est obtenu en ajoutant à l'élastomère de forts taux d'oxamide. Toutefois, l'oxamide présente un caractère abrasif : les outillages de mise en forme de la matrice sont rapidement détériorés et doivent être remis en état fréquemment.

Un autre objet de l'invention est de résoudre ce problème.

La présente invention concerne une matrice élastomère adhésive comprenant un élastomère, des charges, un agent dopant l'adhésion, l'élastomère étant choisi dans le groupe comprenant les copolymères éthylène-propylène-diène-monomère et les élastomères thermoplastiques bi- ou tri-séquencés caractérisée en ce que l'agent dopant l'adhésion est un trimère d'un isocyanate polyfonctionnel.

Avantageusement le trimère d'isocyanate polyfonctionnel est un trimère de l'isophorone diisocyanate.

La matrice élastomère adhésive selon l'invention comporte, pour 100 parties d'élastomère, de 10 à 40 parties de trimère d'isocyanate polyfonctionnel et préférentiellement de 20 à 30 parties de trimère de l'isophorone diisocyanate.

Selon un mode particulier de réalisation la matrice élastomère adhésive comporte une charge conductrice de l'électricité statique, et avantageusement cette charge conductrice de l'électricité statique est du noir de carbone.

Selon un autre mode de réalisation la matrice élastomère adhésive comporte au moins une charge réfractaire sous forme pulvérulente ou sous forme fibreuse.

Une première utilisation de la matrice élastomère adhésive selon l'invention est l'inhibage des blocs de propergol solide.

Une seconde utilisation de la matrice élastomère adhésive selon l'invention est l'enduction, sur au moins une des faces, du substrat d'un tissu.

Avantageusement la matrice est mise en dissolution dans un solvant de l'élastomère et du trimère de l'isocyanate polyfonctionnel, la dissolution est enduite sur une des faces au moins du substrat du tissu, le solvant est évaporé.

Les avantages de la présente invention sont d'une part un collage direct de la matrice élastomère sur le substrat, sans traitement particulier de ce dernier et d'autre part ceux résultants de la suppression de l'oxamide.

On donne maintenant une description détaillée de l'invention qui concerne une matrice élastomère adhésive comprenant un élastomère, des charges, un agent dopant l'adhésion, l'élastomère étant choisi dans le groupe comprenant les copolymères éthylène-propylène-diènemonomères et les élastomères thermoplastiques bi- ou tri-séquencés, cette matrice élastomère est caractérisée en ce que l'agent dopant l'adhésion est un trimère d'un isocyanate polyfonctionnel.

Le copolymère éthylène-propylène-diène-monomère est couramment appelé EPDM. Ce copolymère peut être le mélange de plusieurs copolymères de masses moléculaires différentes pour adapter les propriétés du produit. Ce copolymère est de type caoutchoutique, et de façon connue il doit être vulcanisé ; le système de vulcanisation ici utilisé est à base de peroxydes tels que, par exemple, le péroxyde de dicumyl ; le peroxyde de tertiobutylcumyle ; le peroxyde de 1,1 bis (tertiobutyl) 3,3,5 triméthylcyclohexane ; le peroxyde de 2,5 diméthyl 2,5 bis tertiobutylhexane ; le peroxyde de 1,3 bis (tertiobutyl isopropyl) benzène ; le peroxyde de n-butyl 4,4 bis tertiobutyl valérate ; le peroxyde de 2,5 diméthyl 2,5 bis tertiobutyl hexyne-3. La concentration en système de vulcanisation est celle indiquée et recommandée par les fabricants de caoutchouc.

Les élastomères thermoplastiques bi- ou tri-séquencés utiles pour la présente invention sont choisis parmi les copolymères tels que les poly(styrènebutadiène-styrène) ; les poly(styrène-isopropylènestyrène) ; les poly(éther-polyamide).

Les matrices à base d' EPDM sont préparées dans un malaxeur en plastifiant tout d'abord la gomme caoutchouc à température ambiante (environ 20°C) ; puis on introduit les charges, on homogénéise et toujours à température ambiante on introduit l'agent dopant l'adhésion et divers additifs et enfin le système vulcanisant. La composition est mélangée soigneusement, calandrée en plaques qui sont découpées et assemblées à la forme voulue qui est alors vulcanisée à chaud.

Pour les matrices élastomères à base d'élastomères thermoplastiques le procédé comprend deux étapes. Dans une première étape, on fabrique des granulés par mélangeage, à chaud, de l'élastomère thermoplastique, des charges, des additifs et de l'agent dopant l'adhésion, ce mélange est extrudé en jonc et découpé en granulés. Dans une deuxième étape, l'objet est mis en forme par extrusion à chaud par une filière ou injection dans un moule de forme des granulés précédemment fabriqués.

Le trimère d'isocyanate polyfonctionnel préféré pour la présente invention est un trimère d'isophorone diisocyanate ou suivant la nomenclature chimique le cyclotriisocyanurate d'isophorone diisocyanate.

Avantageusement pour obtenir le résultat recherché on ajoute à la matrice de 10 à 40 parties du trimère d'isocyanate polyfonctionnel, pour 100 parties d'élastomère.

Préférentiellement, on ajoute de 20 à 30 parties du trimère d'isophorone diisocyanate pour 100 parties d'élastomère dans la matrice élastomère adhésive selon l'invention.

Diverses charges sont ajoutées à la matrice élastomère, telles que des charges renforçatrices des propriétés mécaniques, thermiques ou autres.

Avantageusement, au moins une partie de ces charges est une charge conductrice de l'électricité statique, telle que par exemple du noir de carbone. De préférence la concentration pondérale de cette charge est comprise entre 5 et 50 parties pour 100 parties d'élastomère.

L'addition d'une telle charge conductrice de l'électricité permet d'obtenir une matrice élastomère ayant une conductibilité électrique améliorée qui assure l'évacuation de l'électricité statique et améliore les conditions de sécurité pour certaines applications.

Avantageusement aussi ces charges peuvent être des produits réfractaires qui améliorent la tenue thermique et mécanique de la matrice. Ces charges peuvent être introduites sous forme pulvérulente ou sous forme fibreuse. Parmi ces charges réfractaires on peut citer, par exemple, la silice, le carbure de silicium, l'alumine, la zircone.

Sans sortir du cadre de l'invention, il est possible d'ajouter, selon les besoins, des additifs variés, connus de l'homme du métier, tels que par exemple, des antioxydants, des pigments colorants, des plastifiants, etc...

La présente invention concerne aussi l'utilisation d'une matrice élastomère adhésive comme une composition inhibitrice pour fabriquer un inhibiteur pour un bloc propergol solide. Par inhibiteur on entend toute pièce qui est collée sur au moins une partie du bloc de propergol solide pour limiter la surface de combustion de celui-ci. Les inhibiteurs sont des matériaux d'aménagement interne de moteur à propergol solide, ils jouent aussi le rôle de protection de la structure de l'engin.

Les procédés d'inhibage des blocs de propergol peuvent se classer en deux groupes :
- un premier groupe dans lequel la composition inhibitrice est déposée à l'état liquide ou pâteux sur la surface du bloc de propergol déjà réticulé, la composition étant ensuite durcie,
- un second groupe dans lequel la composition inhibitrice est préformée dans un moule et au moins partiellement réticulée pour former une enveloppe dans laquelle sera coulée ou moulée le propergol.

Les propergols solides sont regroupés en différentes familles :
- une première famille comprend les propergols composites qui comportent notamment un liant inerte ou énergétique, des charges oxydantes, éventuellement des charges explosives, des charges réductrices et divers additifs connus de l'homme de l'art. Ces propergols sont en général mis en oeuvre par malaxage des différents ingrédients et ensuite par coulée de la pâte ainsi obtenue dans un moule ou une structure revêtue par l'inhibiteur préalablement mis en forme,
- une seconde famille comprend les propergols à double-base comprenant de la nitrocellulose gélatinisée par un ester nitrique tel que la nitroglycérine et éventuellement des charges oxydantes, explosives et réductrices. Ces propergols sont mis en forme par extrusion ou par moulage : une poudre à mouler à base de nitrocellulose est gélatinisée par un solvant de moulage à base d'ester nitrique. Ces procédés de mise en forme sont bien connus de l'homme de l'art,
- une troisième famille comprend les propergols double-base composites, elle est en cours de développement et utilise notamment des procédés de la famille des composites avec des produits énergétiques du genre ester nitrique.

Selon l'invention, le propergol va adhérer directement à l'inhibiteur fabriqué avec la matrice élastomère selon l'invention.

La présente invention concerne également l'utilisation d'une matrice élastomère, comme précédemment décrite, pour recouvrir au moins une des faces du substrat d'un tissu. De tels tissus comprennent en général un substrat tissé qui assure la souplesse et la résistance, ce substrat peut être en fil métallique, organique ou minéral. Ce substrat est recouvert sur une au moins de ses faces d'un élastomère selon l'invention qui assure l'étanchéité du tissu à divers fluides tels que l'eau ou des gaz. Le tissu conserve sa souplesse et se colle facilement sur lui même pour confectionner divers objets.

Préférentiellement on utilise la matrice élastomère adhésive précédemment décrite en la mettant en dissolution dans un solvant de l'élastomère et du trimère de l'isocyanate polyfonctionnel et en enduisant une face ou les deux faces du substrat du tissu, ensuite on procède à l'évaporation du solvant pour obtenir l'enduction du substrat tissé.

Dans une première réalisation la dissolution de la matrice élastomère adhésive se fait, à environ 90°C sous reflux, dans un solvant comprenant des coupes de pétrole raffiné distillant à des températures comprises entre 135°C et 205°C et contenant des hydrocarbures paraffiniques, aromatiques et naphténiques ; ce type de solvant est souvent désigné par l'appellation "white spirit".

Dans une seconde réalisation la dissolution de la matrice élastomère adhésive se fait, à environ 20°C dans un solvant comprenant des coupes de pétrole raffiné distillant à des températures comprises entre 100°C et 130°C et contenant de 70% à 75% d'hydrocarbures paraffiniques en C7 et C8, 20% à 25% d'hydrocarbures naphténiques en C7 et C8 et moins de 10% d'hydrocarbures benzéniques (toluène, xylène, trace de benzène) ; ce type de solvant est aussi désigné par l'appellation "essence type E".

Selon l'invention la matrice élastomère adhésive qui sert de base pour l'enduction adhère directement sur le substrat du tissu.

Les exemples suivants qui illustrent la présente invention sont donnés uniquement à titre indicatif.

Pour chaque matrice on détermine ses propriétés mécaniques par les grandeurs suivantes :
- sₘ : contrainte maximale, en MPa
ou
- s_{100%} :: contrainte à 100% d'allongement, en MPa
- E :: module d'Young, en MPa
- eᵣ :: allongement relatif, en %
et les caractéristiques du collage sur le substrat par les grandeurs suivantes :
- T :: résistance à la traction, en MPa
- P :: résistance au pelage, en daN/cm.

### Exemple 1

Cet exemple concerne des inhibiteurs préformés dont l'élastomère est un EPDM, les compositions testées sont les suivantes :
- EPDM (VISTALON® 2504) 100 parties
- Antioxydant (ditertio butyl paracrésol) 1 partie
- Agent vulcanisant (VAROX®) 5 parties
- Charge conductrice de l'électricité statique (noir KETJEMBLACK®) 25 parties
- Agent dopant l'adhésion (trimère d'isophorone diisocyanate) x parties

Le tableau 1 récapitule les propriétés mécaniques de ces compositions après vulcanisation et montre que l'ajout d'agent dopant l'adhésion conserve à l'élastomère de bonnes propriétés mécaniques et en tout cas supérieures à celle du substrat à inhiber (voir ci-dessous) ; de plus l'allongement relatif est amélioré par rapport à celui obtenu avec des élastomères dont l'agent dopant l'adhésion est de l'oxamide :

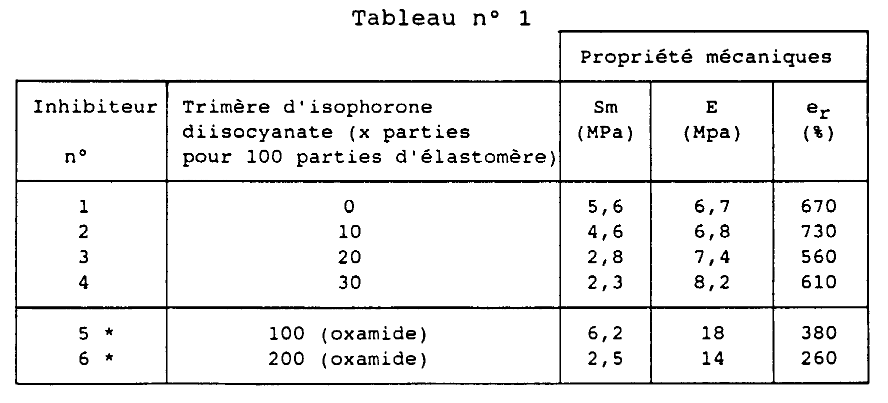

Le tableau 2 donne les caractéristiques des collages sur un propergol composite. Ce propergol est à liant inerte à base de polybutadiène hydroxytéléchélique (PBHT) et il comprend 82% de perchlorate d'ammonium (charge oxydante) et 4% d'aluminium (charge réductrice) ; les propriétés mécaniques de ce propergol sont :
- Sₘ =: 0,99 MPa
- E =: 3,9 MPa
- eᵣ =: 42%

**Tableau n° 2**

| Inhibiteur n° | Trimère d'isophorone diisocyanate (x parties pour 100 parties d'élastomère) | caractéristiques des collages | |
|---|---|---|---|
| | | T (MPa) | P (daN/cm) |
| 1 | 0 | 1,10 | 0,8 |
| 2 | 10 | 1,10 | 1,8 |
| 3 | 20 | 1,70 | 3,4 |
| 4 | 30 | 1,50 | 3,9 |
| 5 * | 100 | 1,30 | 1,9 |
| | oxamide | | |
| 6 * | 200 | 1,00 | 2,8 |
| | oxamide | | |

L'inhibiteur n° 1 n'a pas d'agent dopant l'adhésion, il sert de référence. Les compositions 2,3,4 montrent des caractéristiques de collage améliorées par l'ajout de trimère d'isophorone diisocyanate comme agent dopant l'adhésion. Les exemples comparatifs 5 et 6 concernent des compositions du même type, sauf en ce que l'agent dopant l'adhésion est de l'oxamide comme dans le brevet FR 2 601 669 ; la comparaison montre les améliorations des caractéristiques des collages apportées par la présente invention, ces améliorations nécessitent l'ajout de moins d'agent dopant l'adhésion dans la matrice.

### Exemple 2

Cet exemple concerne des inhibiteurs préformés dont l'élastomère de base est un élastomère thermoplastique : les compositions testées sont les suivantes :
- copolymère styrène-butadiène-styrène (CARIFLEX® TR 1102) 100 parties
- charge conductrice de l'électricité statique (noir KETJEMBLACK®) y parties
- agent dopant de l'adhésion (trimère d'isophorone diisocyanate) x parties

Le tableau 3 récapitule les propriétés mécaniques des produits finis ; on peut faire les mêmes commentaires que précédemment:

**Tableau n° 3**

| Inhibiteur n° | noir y parties | Trimère d'isophorone diisocyanate x parties | Propriétés mécaniques | | |
|---|---|---|---|---|---|
| | | | sₘ (MPa) | s_{100%} (MPa) | eᵣ (%) |
| | (pour 100 parties d'élastomère) | | | | |
| 7 | | 0 | 21,3 | 4,5 | 660 |
| 8 | | 10 | 31,8 | 4,7 | 770 |
| 9 | 0 | 20 | 31,4 | 4,4 | 830 |
| 10 | | 30 | 35,4 | 5,4 | 840 |
| 11 | | 0 | 13,3 | 3,3 | 930 |
| 12 | | 10 | 16,2 | 3,8 | 770 |
| 13 | 20 | 20 | 15,3 | 4,0 | 750 |
| 14 | | 30 | 13,3 | 4,1 | 750 |

Le tableau 4 donne les caractéristiques des collages sur un propergol composite. Ce propergol est à liant PBHT et il comprend 82% de perchlorate d'ammonium (charge oxydante) et 4% d'aluminium (charge réductrice), les propriétés mécaniques de ce propergol sont :
- Sₘ =: 0,83 MPa
- Eₘ =: 3,3 MPa
- eᵣ =: 41%

**Tableau n° 4**

| Inhibiteur n° | Trimère d'isophorone diisocyanate | caractéristiques des collages | |
|---|---|---|---|
| | | T (MPa) | P (daN/cm) |
| 11 | 0 | 0,80 | 2,0 |
| 12 | 10 | 0,80 | 3,5 |
| 13 | 20 | 0,70 | 3,6 |
| 14 | 30 | 0,80 | 3,6 |
| 15 * | 100 oxamide | 0,80 | 2,2 |

L'inhibiteur n° 11 n'a pas d'agent dopant l'adhésion, il sert de référence. Les inhibiteurs 12, 13 et 14 montrent des caractéristiques de collage améliorées, notamment en ce qui concerne le pelage, par l'ajout de trimère d'isophorone diisocyanate comme agent dopant l'adhésion. L'exemple 15 comparatif concerne un inhibiteur du même type sauf que l'agent dopant l'adhésion est de l'oxamide. La comparaison montre les améliorations apportées par la présente invention notamment en ce qui concerne le pelage.

Le tableau n° 5 donne les caractéristiques des collages sur un propergol double-base obtenu par moulage : la poudre à mouler comprend de la nitrocellulose, de l'octogène et de la nitroglycérine, le solvant de moulage est à base de nitroglycérine. Les propriétés mécaniques de ce propergol sont :
- Sₘ =: 1,7 MPa
- E =: 1,9 MPE
- eᵣ =: 84%

**Tableau n°5**

| Inhibiteur n° | Trimère d'isophorone diisocyanate (x parties pour 100 parties d'élastomère) | caractéristiques des collages | |
|---|---|---|---|
| | | T (MPa) | P (daN/cm) |
| 7 | 0 | 0,15 | 0,3 |
| 8 | 10 | 0,40 | 0,8 |
| 9 | 20 | 0,30 | 0,7 |
| 10 | 30 | 0,35 | 0,7 |

L'inhibiteur n° 7 n'a pas d'agent dopant l'adhésion, il sert de référence. Les inhibiteurs 8, 9, 10 montrent des propriétés de collage nettement améliorées par la présente invention.

### Exemple 3

Cet exemple concerne l'utilisation d'une matrice élastomère adhésive, à base d'EPDM, pour enduire un substrat tissé en fil de fibre de polyaramide (Kevlar®), le tissu ainsi obtenu est notamment utilisé pour la fabrication de sac gonflable.

Le tableau n° 6 donne les compositions, en partie en poids, envisagées pour cette enduction ; l'enduction n° 1 est réalisée suivant la présente invention, l'enduction n° 2 est réalisée avec un époxyde comme agent dopant l'adhésion :

**Tableau n° 6**

| Enduction n° | Composition | | | | | |
|---|---|---|---|---|---|---|
| | EPDM (p) | antioxydant (p) | système vulcanisant (p) | noir (p) | charge (p) | Agent dopant d'adhésion (p) |
| 1 | 100 | 1 DBPC | 5 VAROX® | 20 | 12 SiO₂ | 20 trimère d'IPDI |
| 2 | 100 | 1 DBPc | 5 VAROX | 20 | 12 SiO₂ | 20 Epoxyde |
| DBPC : ditertio-butyl-paracrésol VAROX® : peroxyde de 2,5 diméthyl 2,5bis tertiobutylhexane SiO₂ : silice IPDI : isophorone diisocyanate (p) : parties en poids. | | | | | | |

Le tableau n° 7 donne les propriétés mécaniques des matrices élastomères après vulcanisation, pour les deux agents dopant l'adhésion, les propriétés mécaniques sont comparables :

**Tableau n° 7**

| Enduction n° | Propriétés mécaniques | | | |
|---|---|---|---|---|
| | Sₘ (MPa) | E (MPa) | E_{100%} (MPa) | eᵣ (%) |
| 1 | 5,4 | 4,2 | 1,9 | 400 |
| 2 | 4,5 | 4,4 | 1,8 | 410 |

Les compositions EPDM sont préparées de façon classique jusqu'à l'opération de calandrage. Les plaques calandrées sont alors découpées en morceaux de 1 cm² environ et sont introduites dans du "white spirit" chauffé qui est le solvant, à raison de 2/5 en poids d'élastomère pour 3/5 de white spirit. La dissolution est effectuée pendant 2 à 3 heures sous reflux à environ 95°C. Avantageusement selon une variante la dissolution de la composition EPDM se fait, à environ 20°C, dans de "l'essence type E" au lieu du "white spirit".

La dissolution est ensuite déposée en couche mince de quelques dixièmes de millimètre d'épaisseur sur le substrat tissé. Le solvant est évaporé et récupéré par ailleurs, le lissage se fait naturellement pendant le séchage. Ensuite l'élastomère est vulcanisé à chaud et sous pression à l'autoclave.

Le tableau n° 8 donne les caractéristiques de collage, évaluées par le pelage, sur un substrat en fibres polyaramides ensimé ou non, l'ensimage est un traitement courant dans ce domaine, il consiste à déposer sur les fibres textiles un produit chimique destiné à en modifier les propriétés de surface comme par exemple l'adhérence à la matrice élastomère de l'enduction :

**Tableau n° 8**

| Enduction n° | P en (daN/cm) | |
|---|---|---|
| | substrat Kevlar ensimé | substrat Kevlar non ensimé |
| 1 | > 1,3 | ≥ 1,3 |
| 2 | 1,1 | 1,1 |

Dans ce tableau l'enduction n° 1 est réalisée avec une dissolution d'EPDM contenant comme dopant de collage le trimère de l'isophorone diisocyanate selon notre invention, l'enduction n° 2 est réalisée avec une dissolution d'EPDM ne contenant pas de trimère d'isophorone diisocyanate.

Le tableau montre d'une part l'amélioration très nette des caractéristiques de collage par l'ajout à la matrice élastomère de l'agent dopant l'adhésion selon notre invention, et, accessoiremant, d'autre part que traitement préalable du substrat du tissu est indifférent dans ce cas : même valeur de pelage que le substrat soit ensimé ou pas.

Par ailleurs on obtient un excellent collage du tissu sur lui-même (face enduite sur face enduite).

## Revendications

1. Matrice élastomère adhésive comprenant un élastomère, des charges, un agent dopant l'adhésion ; l'élastomère étant choisi dans le groupe comprenant les copolymères éthylène-propylène-diène-monomère (EPDM) et les élastomères thermoplastiques bi- ou tri-séquencés caractérisée en ce que l'agent dopant l'adhésion est un trimère d'un isocyanate polyfonctionnel.

2. Matrice élastomère adhésive selon la revendication 1 caractérisée en ce que le trimère d'isocyanate polyfonctionnel est un trimère de l'isophorone diisocyanate.

3. Matrice élastomère adhésive selon l'une des revendications 1 ou 2 caractérisée en ce que pour 100 parties d'élastomère on ajoute de 10 à 40 parties de trimère d'isocyanate polyfonctionnel.

4. Matrice élastomère adhésive selon la revendication 3 caractérisée en ce que pour 100 parties d'élastomère on ajoute de 20 à 30 parties de trimère de l'isophorone diisocyanate.

5. Matrice élastomère adhésive selon l'une des revendications 1 à 4 caractérisée en ce qu'elle comporte une charge conductrice de l'électricité statique.

6. Matrice élastomère adhésive selon la revendication 5 caractérisée en ce que la charge conductrice de l'électricité statique est du noir de carbone.

7. Matrice élastomère adhésive selon l'une des revendications 1 à 4 caractérisée en ce qu'elle comporte au moins une charge réfractaire sous forme pulvérulente ou sous forme fibreuse.

8. Utilisation, pour inhiber un bloc de propergol solide, d'une matrice élastomère adhésive selon l'une des revendications 1 à 7.

9. Utilisation, pour recouvrir au moins une des faces du substrat d'un tissu, d'une matrice élastomère adhésive selon l'une des revendications 1 à 7.

10. Utilisation selon la revendication 9 caractérisée en ce que la matrice élastomère adhésive est mise en dissolution dans un solvant de l'élastomère et du trimère de l'isocyanate polyfonctionnel.

11. Utilisation selon la revendication 10 caractérisée en ce que la dissolution est faite à environ 90°C dans du "white spirit".

12. Utilisation selon la revendication 10 caractérisée en ce que la dissolution est faite à environ 20°C dans de "l'essence type E".

## Patentansprüche

1. Adhäsive Elastomermatrix, die ein Elastomer, Füllstoffe und ein Dotierungsmittel zur Haftungsverbesserung enthält, wobei das Elastomer unter den Copolymeren von Ethylen, Propylen und einem Dienmonomer (EPDM) und den thermoplastischen Zweiblock- oder Dreiblock-Elastomeren ausgewählt ist, dadurch gekennzeichnet, daß das Dotierungsmittel zur Haftverbesserung ein polyfunktionelles Isocyanat-Trimer ist.

2. Adhäsive Elastomermatrix nach Anspruch 1, dadurch gekennzeichnet, daß das polyfunktionelle Isocyanat-Trimer ein Isophorondiisocyanat-Trimer ist.

3. Adhäsive Elastomermatrix nach einem der Ansprüche 1 oder 2, dadurch gekennzeichnet, daß auf 100 Teile Elastomer 10 bis 40 Teile polyfunktionelles Isocyanat-Trimer zugegeben werden.

4. Adhäsive Elastomermatrix nach Anspruch 3, dadurch gekennzeichnet, daß auf 100 Teile Elastomer 20 bis 30 Teile Isophorondiisocyanat-Trimer zugegeben werden.

5. Adhäsive Elastomermatrix nach einem der Ansprüche 1 bis 4, dadurch gekennzeichnet, daß sie einen elektrisch leitenden Füllstoff zur Ableitung der statischen Elektrizität enthält.

6. Adhäsive Elastomermatrix nach Anspruch 5, dadurch gekennzeichnet, daß der elektrisch leitende Füllstoff zur Ableitung der statischen Elektrizität Ruß ist.

7. Adhäsive Elastomermatrix nach einem der Ansprüche 1 bis 4, dadurch gekennzeichnet, daß sie mindestens einen feuerfesten Füllstoff in Pulverform oder in Form von Fasern enthält.

8. Verwendung einer adhäsiven Elastomermatrix nach einem der Ansprüche 1 bis 7 zur Inhibierung von festen Propergolblöcken.

9. Verwendung einer adhäsiven Elastomermatrix nach einem der Ansprüche 1 bis 7, um mindestens eine Oberfläche eines Gewebesubstrats zu beschichten.

10. Verwendung nach Anspruch 9, dadurch gekennzeichnet, daß die adhäsive Elastomermatrix in einem Lösungsmittel des Elastomers und des polyfunktionellen Isocyanat-Trimers gelöst wird.

11. Verwendung nach Anspruch 10, dadurch gekennzeichnet, daß das Lösen bei etwa 90 °C in "white spirit" durchgeführt wird.

12. Verwendung nach Anspruch 10, dadurch gekennzeichnet, daß das Lösen bei etwa 20 °C in "essence type E" durchgeführt wird.

## Claims

1. Adhesive elastomeric matrix comprising an elastomer, fillers and an adhesion additive, the elastomer being selected from the group comprising ethylene-propylene-diene-monomer (EPDM) and bi- or tri-sequenced thermoplastic elastomers, characterized in that the adhesion additive is a trimer of a polyfunctional isocyanate.

2. Adhesive elastomeric matrix according to claim 1, characterized in that polyfunctional isocyanate trimer is a trimer of isophorone di-isocyanate.

3. Adhesive elastomeric matrix according to claim 1 or claim 2, characterized in that 10 to 40 parts of polyfunctional isocyanate trimer are added per 100 parts of elastomer.

4. Adhesive elastomeric matrix according to claim 3, characterized in that 20 to 30 parts of isophorone di-isocyanate trimer are added per 100 parts of elastomer.

5. Adhesive elastomeric matrix according to one of claims 1 to 4, characterized in that it comprises a filler which conducts static electricity.

6. Adhesive elastomeric matrix according to claim 5, characterized in that the filler which conducts static electricity is carbon black.

7. Adhesive elastomeric matrix according to one of claims 1 to 4, characterized in that it comprises at least one refractory filler in powder form or in fibrous form.

8. Use of an adhesive elastomeric matrix according to one of claims 1 to 7 for inhibiting a solid propellant grain.

9. Use of an adhesive elastomeric matrix according to one of claims 1 to 7 for covering at least one of the faces of the substrate of a fabric.

10. Use according to claim 9 characterized in that the adhesive elastomeric matrix is dissolved in a solvent for the elastomer and for the polyfunctional isocyanate trimer.

11. Use according to claim 10 characterized in that dissolution is carried out at approximately 90°C in "white spirit".

12. Use according to claim 10 characterized in that dissolution is carried out at approximately 20°C in "type E petroleum spirit".
